# EUROPÄISCHE PATENTSCHRIFT

(11) **EP 2 132 010 B1**
(45) Veröffentlichungstag und Bekanntmachung des Hinweises auf die Patenterteilung: **17.08.2011**
(21) Anmeldenummer: 08707110.6
(22) Anmeldetag: 17.01.2008
(51) Int. Cl.: B26D 3/28, A47J 43/25

(54) **KÜCHENHOBEL**
KITCHEN SLICER
TRANCHEUSE DE CUISINE

(30) Priorität: 07.02.2007 DE 102007007308
(43) Veröffentlichungstag der Anmeldung: 16.12.2009
(73) Patentinhaber: Boerner Kunststoff- und Metallwarenfabrik GmbH, 54526 Landscheid-Niederkail (DE)
(72) Erfinder: BOERNER, Juergen, 54526 Landscheid-Niederkail (DE)
(74) Vertreter: Steil, Christian
(86) Internationale Anmeldenummer: PCT/EP2008/000345
(87) Internationale Veröffentlichungsnummer: WO 2008/095592

(56) Entgegenhaltungen:
- EP-A- 1 468 793
- WO-A-2006/131911
- DE-A1- 3 500 959
- DE-U1- 29 913 953
- DE-U1-202005 006 819
- US-A- 4 733 588
- US-A1- 2004 217 220
- US-A1- 2006 283 299

## Beschreibung

Die vorliegende Erfindung betrifft einen Küchenhobel zum Schneiden von Schneidgut, wie Obst, Gemüse etc. mit einem Grundkörper, an dem ein Messer festgelegt ist, das an einer Kante einer Auslauffläche angeordnet ist, und mit einer Führungsfläche, auf der das Schneidgut bewegt und dem Messer definiert zugeführt werden kann, wobei der Grundkörper wenigstens eine Funktionsfläche aufweist, an der der Küchenhobel von einem Benutzer greifbar ist, auf der ein Schneidguthalter bewegbar ist und/oder auf der Schneidgut bewegbar ist.

In der US 4,733,588, aus der die Merkmale des Oberbegriffs des Anspruchs 1 bekannt sind, ist ein Küchenhobel offenbart, bei dem die Funktionsfläche durch wenigstens ein vom Grundkörper separat ausgebildetes Anbauteil gebildet ist.

Weiterhin betrifft die Erfindung ein Verfahren zum Herstellen eines solchen Küchenhobels.

Ein derartiger Küchenhobel ist bekannt aus DE 103 28 506 B4.

Derartige Küchenhobel werden dazu verwendet, Schneidgut, wie z.B. Obst, Gemüse und dergleichen, definiert zu zerkleinern. Dabei wird der Hobel mit einer Hand an einem Griff gehalten und mit dem dem Griff gegenüberliegenden Ende auf einer Unterlage oder einer Schüssel abgestützt. Das zu zerkleinernde Schneidgut wird auf einer Führungsfläche hin- und herbewegt und einem Messer, das quer oder schräg zur Hauptachse des Küchenhobels angeordnet ist, oder aber V-förmig ausgebildet ist, zugeführt. Bei jeder Bewegung des Schneidguts über das Messer wird eine Scheibe von dem Schneidgut abgeschnitten und fällt durch einen Schlitz zwischen Messer und Führungsfläche hindurch.

Die Führungsfläche wird teilweise als auswechselbarer Einsatz bereitgestellt und kann zur Schnittstärkenverstellung in unterschiedlichen Positionen in den Grundkörper eingesetzt und durch unterschiedlich ausgeführte Einsätze mit zusätzlichen Schneidelementen ausgetauscht werden, um verschiedene Schneidvarianten zu bieten.

Aus der eingangs genannten DE 103 28 506 B4 ist ein Küchenhobel mit einem Einsatz bekannt, bei dem der Einsatz sowohl zur Schnittstärkeneinstellung dient als auch als besondere Funktion als Verletzungsschutz dienen kann.

Aus DE 101 54 130 A1 ist ein Küchenhobel sowie ein Verfahren zum Herstellen eines Küchenhobels bekannt, der ein V-förmiges Messer aufweist, wobei das Messer aus einem geraden Messer hergestellt, zu einem V-förmigen Messer umgebildet und danach an dem Grundkörper des Küchenhobels angebracht wird. Durch dieses Verfahren, das V-förmige Messer aus einem einstückigen Teil zu formen, wird der Herstellungsaufwand des Küchenhobels erheblich reduziert.

Aus der DE 299 13 953 U1 ist ein weiterer Küchenhobel bekannt, bei dem der Grundkörper aus Metall und einem Messerelement besteht, wobei Messerelement und Grundkörper durch Punktschweißen miteinander verbunden sind. Die Herstellung eines derartigen Küchenhobels ist durch die Methode des Punktschweißens und die Herstellung der metallischen Einzelteile mit einem erheblichen Aufwand verbunden. Aus der bereits genannten DE 103 28 506 B4 ist es ferner bekannt, den Grundkörper aus Kunststoff zu fertigen und das Messer von dem Grundstoff des Grundkörpers zu umspritzen und so den Herstellungsaufwand zu reduzieren. Derartige Küchenhobel mit einem Grundkörper aus Kunststoff sind weniger stabil und weniger kratz- bzw. schnittfest als Küchenhobel, die aus Metall gefertigt sind. Die Funktionsflächen, wie die Führungsfläche, die Auslauffläche sowie die Seitenkanten, können durch die geringere Härte des Werkstoffs schon nach längerer Gebrauchszeit Rillen aufweisen. In diesen Rillen können sich Lebensmittelreste und Bakterien anlagern, was bei Geräten zur Zubereitung von Lebensmitteln besonders unvorteilhaft ist. Darüber hinaus hat ein Küchenhobel mit einem Grundkörper aus Kunststoff ein geringwertigeres Aussehen.

Es ist demzufolge die Aufgabe der vorliegenden Erfindung, einen stabilen und widerstandsfähigen Küchenhobel anzugeben, bei dem der Herstellungsaufwand reduziert ist.

Diese Aufgabe wird bei dem eingangs genannten Hobel dadurch gelöst, dass die Funktionsfläche durch wenigstens ein von dem Grundkörper separat ausgebildetes Anbauteil gebildet ist, das mit dem Grundkörper verbunden ist.

Ferner wird die obige Aufgabe gelöst durch ein Verfahren zum Herstellen eines Küchenhobels, der einen Grundkörper aus einem Kunststoffmaterial, ein Messer sowie eine Auslauffläche aufweist, mit den Schritten: Bereitstellen eines Anbauteils aus Metall, Bereitstellen eines Messers und Spritzgießen eines Grundkörpers unter Einbeziehung des Anbauteils und des Messers, derart, dass diese in einem Arbeitsvorgang in den Grundkörper eingespritzt werden.

Dadurch, dass die Funktionsfläche von dem Grundkörper separat ausgebildet ist und mit diesem verbunden ist, kann die Funktionsfläche aus einem Bauteil gebildet werden, das aus einem widerstandsfähigen und hochwertig anmutenden Werkstoff besteht, wobei der Grundkörper aus einem leicht verarbeitbaren Material ausgebildet sein kann.

Somit können die unterschiedlichen Eigenschaften verschiedener Werkstoffe genutzt werden.

Die Aufgabe wird vollständig gelöst.

Erfindungsgemäß wird das Anbauteil nach Art einer Manschette auf einen Griffträger des Grundkörpers aufgeclipst.

Durch diese Maßnahme kann das Anbauteil ohne Zusatzmaßnahme am Grundkörper befestigt werden.

Weiterhin ist es von besonderem Vorteil, wenn wenigstens ein Anbauteil als Holmelement ausgebildet ist, das einen Teil wenigstens eines seitlichen Holms des Küchenhobels bildet.

Durch diese Ausgestaltung kann die Abnutzung des Küchenhobels bei Benutzung eines Fruchthalters reduziert werden.

In einer bevorzugten Ausgestaltung ist das Holmelement auf eine Längsführung an dem Grundkörper aufgeschoben.

Dadurch lässt sich das Holmelement ohne Zusatzaufwand besonders stabil an dem Grundkörper befestigen.

In einer besonderen Ausführungsform ist die Längsführung als prismatische Führungsschiene im Grundkörper ausgebildet.

Diese Führungsschiene lässt sich vorteilhafterweise mit einfachen Mitteln im Grundkörper realisieren und bietet gleichzeitig eine stabile Haltevorrichtung für aufgeschobene Anbauelemente.

Dabei ist es von besonderem Vorzug, wenn das Holmelement mit einem oberen Ende an einem Anschlag des Grundkörpers anliegt.

Durch diese Ausführungsform kann die Anzahl der Haltevorrichtungen, die die aufgeschobenen Holmelemente in einer Längsposition fixieren, reduziert werden.

Vorteilhaft ist es, wenn das Holmelement mittels Rastmitteln in einer Längsposition am Grundkörper festgelegt ist.

Durch diese Maßnahme wird verhindert, dass sich das Holmelement bei Gebrauch des Küchenhobels verschiebt.

Weiterhin ist es von Vorteil, wenn der Küchenhobel wenigstens ein elastisches Element aufweist, das an einem unteren Ende des Küchenhobels angeordnet ist und zur Rutschsicherung dient.

Durch diese Rutschsicherung kann der Küchenhobel selbst in Schräglage auf einer ebenen, glatten Arbeitsunterlage vom Benutzer sicher gehalten werden.

In einer bevorzugten Ausführungsform ist es vorteilhaft, wenn wenigstens ein elastisches Element an wenigstens einem der Holmelemente, in einer besonderen Ausführungsform aber an zwei gegenüberliegenden Holmelementen festgelegt ist.

Durch diese Maßnahme kann dem Küchenhobel auf einer glatten Unterlage ein besonders sicherer Stand vermittelt werden, ohne bei der Benutzung zu kippeln. Weiterhin ist es von Vorteil, wenn wenigstens ein Abschlusselement an einem unteren Ende wenigstens eines der Holmelemente festgelegt ist.

Hierdurch kann verhindert werden, dass Reibgutreste zwischen Holmelement und Längsführung eindringen.

Vorteilhaft ist es, wenn das Abschlusselement mittels Rastmitteln an dem Holmelement und/oder an dem Grundkörper festgelegt ist, da dieses Element so einfach und stabil fixiert werden kann.

Vorzugsweise ist das elastische Element in einer Ausklinkung des Holmelements formschlüssig festgelegt.

Durch diese Montagevariante kann das elastische Element im Falle der Abnutzung leicht ersetzt werden.

In einer weiteren Ausgestaltung umschließt das Abschlusselement das elastische Element wenigstens teilweise und legt dieses in der Ausklinkung des Holmelementes fest.

Durch diese zusätzliche Verbindung zwischen elastischem Element und Abschlusselement wird dem Küchenhobel im unteren Bereich zusätzlich Stabilität verliehen.

In einer besonderen Ausführungsform kann das elastische Element mit dem Abschlusselement und/oder dem Holmelement verklebt sein.

Dadurch wird das elastische Element besonders dauerhaft fixiert.

Vorzugsweise ist wenigstens eines der Anbauteile nach Art einer Manschette auf den Grundkörper aufgeclipst und bildet die Auslauffläche.

Dadurch ist die Auslauffläche, die mit dem Schneidgut sehr häufig in Kontakt tritt, vor besonders starker Abnutzung geschützt.

In einer weiteren Ausführungsform ist der Grundkörper aus Kunststoff im Spritzgussverfahren hergestellt und ist die Auslauffläche durch ein Anbauteil aus Metall gebildet, das in den Grundkörper eingespritzt ist.

Dadurch kann die Auslauffläche am Grundkörper besonders fest verankert werden.

Vorzugsweise weist der Küchenhobel einen auswechselbaren Einsatz auf, der mittels Festlegungsmitteln an dem Grundkörper festlegbar ist und der die Führungsfläche bildet.

Durch diesen auswechselbaren Einsatz können unterschiedliche Schnittwerkzeuge zum Einsatz kommen und beliebig ausgetauscht werden.

In einer besonderen Ausführungsform ist der Einsatz aus einem Kunststoff im Spritzgussverfahren hergestellt und die Auslauffläche durch ein Anbauteil aus Metall gebildet, das in den Einsatz eingespritzt ist.

Durch diese Ausführungsform wird dem Einsatz eine besondere Widerstandsfähigkeit gegen Abnutzung verliehen.

In einer weiteren Ausführungsform ist ein Anbauteil nach Art einer Manschette auf den Einsatz aufgeclipst und bildet die Führungsfläche.

Dadurch kann der Einsatz mittels eines wenig aufwändigen Verfahrens veredelt werden.

Vorteilhaft ist es, wenn der Grundkörper Kunststoff aufweist. Besonders bevorzugt ist es, wenn der Grundkörper vorwiegend aus Kunststoff besteht.

Dadurch lässt sich der Grundkörper in einem einfachen Verfahren, wie z.B. dem Spritzgussverfahren, herstellen.

Vorteilhaft ist es ferner, wenn das Anbauteil Metall aufweist. Jedoch ist es besonders bevorzugt, wenn das Anbauteil aus Stahl, insbesondere aus 18/10-Stahl, besteht.

Dadurch lassen sich Anbauteile in einem einfachen Umformverfahren wie einem Biegeverfahren herstellen, die gleichzeitig sehr widerstandsfähig sind und ein wertiges Aussehen des Gesamtproduktes vermitteln.

Sofern ein Anbauteil an einem bertest fertig hergestellten (z. B. aus Kunststoff gespritzten) Grundkörper anzubringen ist, ist es neben einer formschlüssigen Anbringung auch möglich, das Anbauteil an dem Grundkörper klebend oder im Ultraschallschweissen anzubringen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der durch die Patentansprüche definierten vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Darstellung einer Ausführungsform des erfindungs- gemäßen Küchenhobels mit Anbauteilen;
- Fig. 2: eine perspektivische Darstellung des Grundkörpers des erfindungsgemä- ßen Küchenhobels ohne Anbauteile;
- Fig. 3: eine perspektivische Ansicht des Küchenhobels mit Anbauteilen und Abschlusselementen;
- Fig. 4: eine perspektivische Detailansicht eines Seitenholms mit Anschlag;
- Fig. 5: eine perspektivische Ausschnittsdarstellung eines unteren Endes eines Seitenholms mit elastischem Element und Abschlusselement.

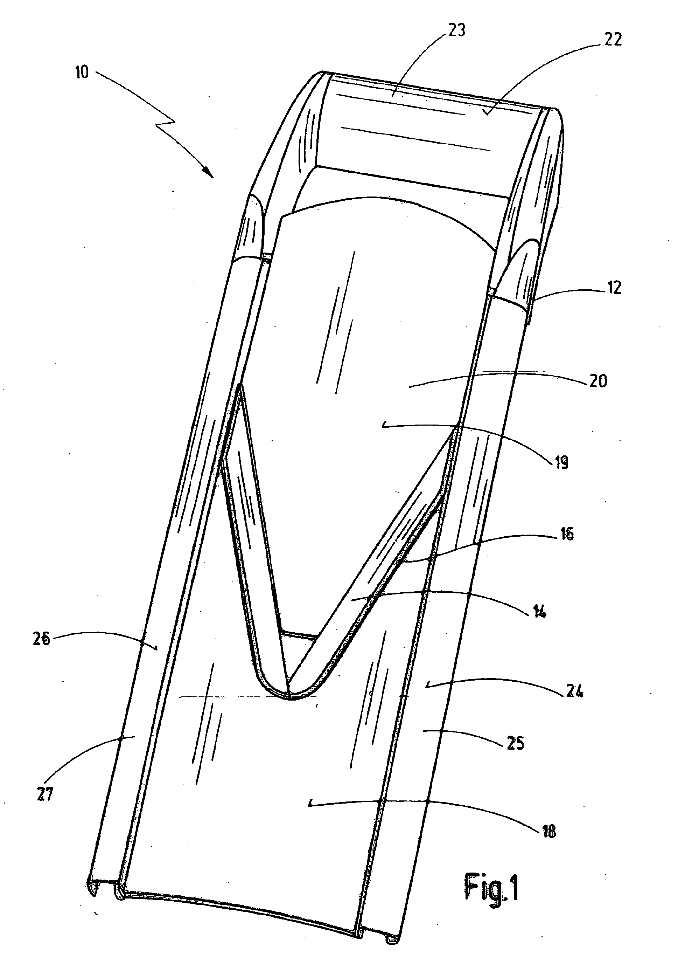

In Fig. 1 ist eine Ausführungsform des erfindungsgemäßen Küchenhobels generell mit 10 bezeichnet.

Der Küchenhobel 10 weist einen Grundkörper 12 und ein V-förmiges Messer 14 auf.

Der Grundkörper 12 kann aus Kunststoff hergestellt sein.

Das Messer 14 kann, wie in dieser Ausführungsform dargestellt, ein V-Messer sein, wobei allerdings auch denkbar ist, dass das Messer 14 als geradliniges Messer ausgeführt ist. Das Messer 14 ist an einer Kante 16 einer Auslauffläche 18 des Grundkörpers 12 angeordnet.

Auf der der Auslauffläche 18 gegenüberliegenden Seite ist ein auswechselbarer Einsatz 19 angeordnet, der eine Führungsfläche 20 bildet. Der Küchenhobel 10 kann jedoch auch ohne Einsatz ausgebildet sein, wobei die Führungsfläche 20 durch den Grundkörper 12 gebildet ist.

Die Führungsfläche 20 dient dazu, das Schneidgut dem Messer 14 definiert zuzuführen und eine gleichbleibende Schnittstärke des Schneidguts zu erzeugen. Dabei wird das Schneidgut auf die Führungsfläche 20 aufgesetzt und über das Messer 14 auf die Auslauffläche 18 geschoben. Das geschnittene Schneidgut wird durch einen Schlitz zwischen Messer 14 und Führungsfläche 20 abgeführt.

An einem oberen, der Auslauffläche 18 gegenüberliegenden Ende des Küchenhobels 10 ist ein Anbauteil 23 aus Metall angeordnet, das eine Funktionsfläche 22 bildet, an der der Benutzer den Küchenhobel 10 ergreifen kann.

An beiden Längsseiten des Küchenhobels 10 sind Anbauteile 25, 27 angeordnet, die an dem Grundkörper 12 festgelegt und als Holmelemente 25, 27 ausgebildet sind. Diese Holmelemente 25, 27 bilden jeweils eine weitere Funktionsfläche 24, 26, auf der ein Schneidguthalter bewegt werden kann.

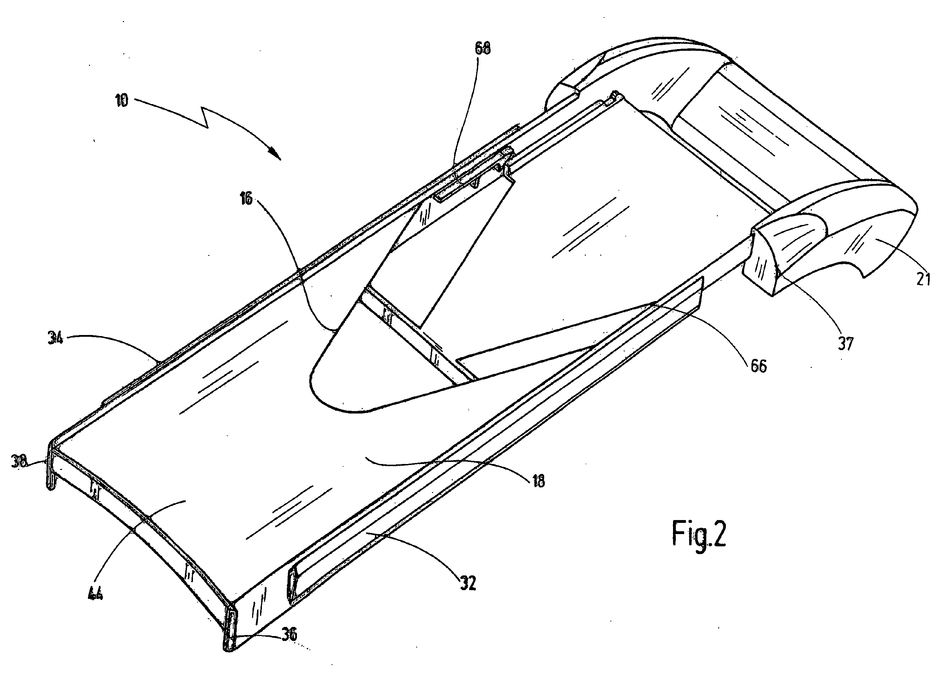

In Fig. 2 ist der Grundkörper 12 des Küchenhobels 10 der Fig. 1 ohne Anbauteile in perspektivischer Ansicht schematisch dargestellt.

An der Auslauffläche 18 ist die Kante 16 zu erkennen, an der das in dieser Darstellung nicht gezeigte Messer 14 angeordnet ist. An dem einem unteren Ende 44 des Grundkörpers 12 gegenüberliegenden Ende ist ein Griffträger 21 angeordnet, an dem das nicht dargestellte Anbauteil 23 nach Art einer Manschette aufgeclipst werden kann und dem Halten durch den Benutzer dient. Zu beiden Längsseiten der Auslauffläche 18 sind Längsführungen 32, 34 an dem Grundkörper 12 ausgebildet, auf die hier nicht dargestellte Holmelemente 25, 27 aufgeschoben werden können. Der Griffträger 21 weist einen Anschlag 37 auf, an dem die Holmelemente 25, 27 festgelegt werden können. Am unteren Ende 44 des Grundkörpers 12 sind zu beiden Seiten der Auslauffläche 18 Rastmittel 36, 38 ausgebildet, die die Holmelemente 25, 27 in einer Längsposition an dem Grundkörper 12 festlegen können.

Im Bereich zwischen der Kante 16 und dem Griffträger 21 sind Festlegungsmittel 66, 68 an dem Grundkörper 12 angeordnet. Die Festlegungsmittel 66, 68 dienen dazu, den nicht dargestellten Einsatz 19, der die Führungsfläche 20 bildet, an dem Grundkörper 12 festzulegen.

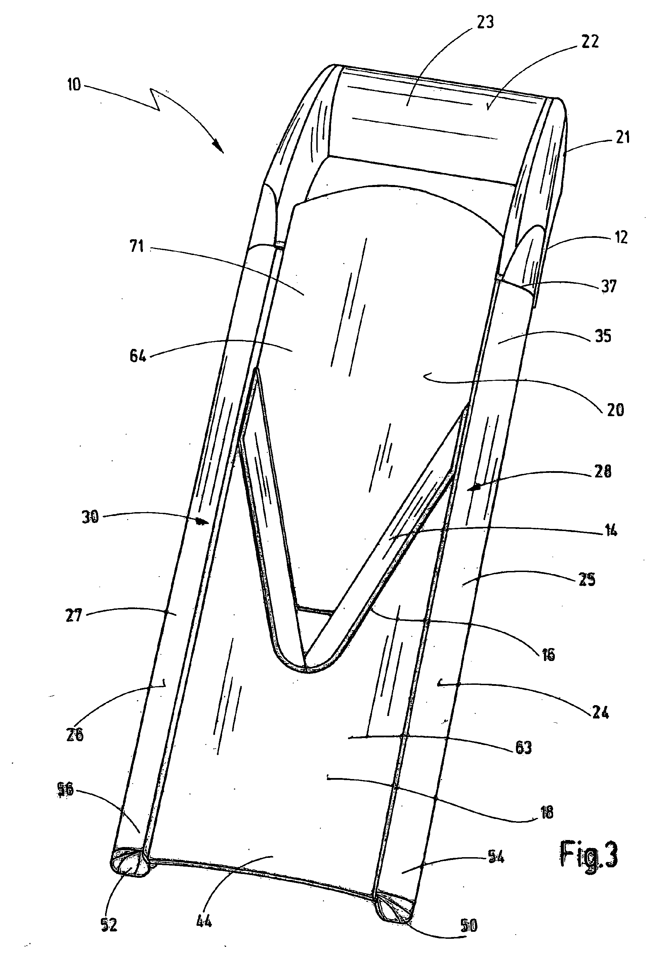

Fig. 3 zeigt einen erfindungsgemäßen Küchenhobel 10 mit allen Anbauteilen in perspektivischer Darstellung.

Auf den Griffträger 21 ist ein Anbauteil 23 aufgeclipst. Dieses Anbauteil 22 ist bevorzugterweise als Biegeteil aus Metall ausgeführt und bildet eine Funktionsfläche 22, an der der Küchenhobel 10 von einem Benutzer ergreifbar ist und so im Betrieb festhaltbar ist.

Als weitere Funktionsfläche ist die Auslauffläche 18 dargestellt. Die Auslauffläche 18 kann in einer Ausführungsform als Teil des Grundkörpers 12 ausgebildet sein, ist jedoch vorliegend mit einem Anbauteil 63 flächig abgedeckt. Dieses Anbauteil 63 kann in einer besonderen Ausführungsform als Metallbiegeteil auf den Grundkörper 12 aufgeclipst sein oder aber im Spritzgussverfahren mit dem Grundkörper 12 verspritzt sein. Durch diese metallische Abdeckung ist die Auslauffläche gegenüber Beschädigungen, wie z.B. Rillen oder Kratzer, weitestgehend geschützt und kann vergleichsweise einfach und hygienisch gereinigt werden.

Als weitere Funktionsfläche dient die Führungsfläche 20, auf der das Schneidgut bewegt und dem Messer 14 definiert zugeführt werden kann. Die Führungsfläche 20 kann durch den separaten Einsatz 19 oder als Teil des Grundkörpers 12 ausgeführt sein. Die Funktionsfläche 20 kann aus einem weiteren Anbauteil 71 gebildet sein. Dieses Anbauteil 71 besteht in einer bevorzugten Ausführungsform aus Metall, insbesondere aber aus Stahl. Dieses Anbauteil 71 kann als Biegeteil nach Art einer Manschette auf den Grundkörper bzw. den auswechselbaren Einsatz 19 aufgeclipst sein.

In einer weiteren Ausführungsform der Erfindung kann das Anbauteil 71 mit dem Einsatz 19 im Spritzgussverfahren verspritzt sein. Weiterhin ist auch denkbar, dass das Anbauteil 71 mit dem Grundkörper 12 im Spritzgussverfahren verspritzt wird.

Das Messer 14 kann als V-förmiges Messer oder als geradliniges Messer ausgeführt sein und mit dem Grundkörper 12 im Spritzgussverfahren verspritzt sein.

Der Küchenhobel 10 weist an beiden Seiten Holme 28, 30 auf, die wenigstens teilweise aus den Holmelementen 25, 27 bestehen. Die Holmelemente 25, 27 sind auf die nicht dargestellten Längsführungen 32, 34 an dem Grundkörper 12 aufgeschoben. Die Holmelemente 25, 27 sind an einem oberen Ende 35 im Bereich des Griffträgers 21 durch einen Anschlag 37 und am unteren Ende 54 mittels den Rastmitteln 36, 38 in einer Längsposition an dem Grundkörper 12 festgelegt.

Die Holmelemente 25, 27 können in einer bevorzugten Ausführungsform als metallische Biegeteile aus Stahl ausgebildet sein und bilden mit den Längsführungen 32, 34 eine formschlüssige Verbindung. Die Holmelemente 25, 27 sind an ihren unteren Enden 54, 56 mit Abschlusselementen 50, 52 abgeschlossen, die an den Holmelementen 25, 27 festgelegt sind. Die Abschlusselemente 50, 52 können aus Kunststoff oder Metall ausgeführt sein und dienen dazu, die Holmelemente 25, 27 nach unten hin zu verschließen. Sie können mit dem Grundkörper 12 und/oder den Holmelementen 25, 27 über Rastmittel verbunden sein, vorzugsweise jedoch über die Rastmittel 38, die auch zur Festlegung der Holmelemente 25, 27 dienen.

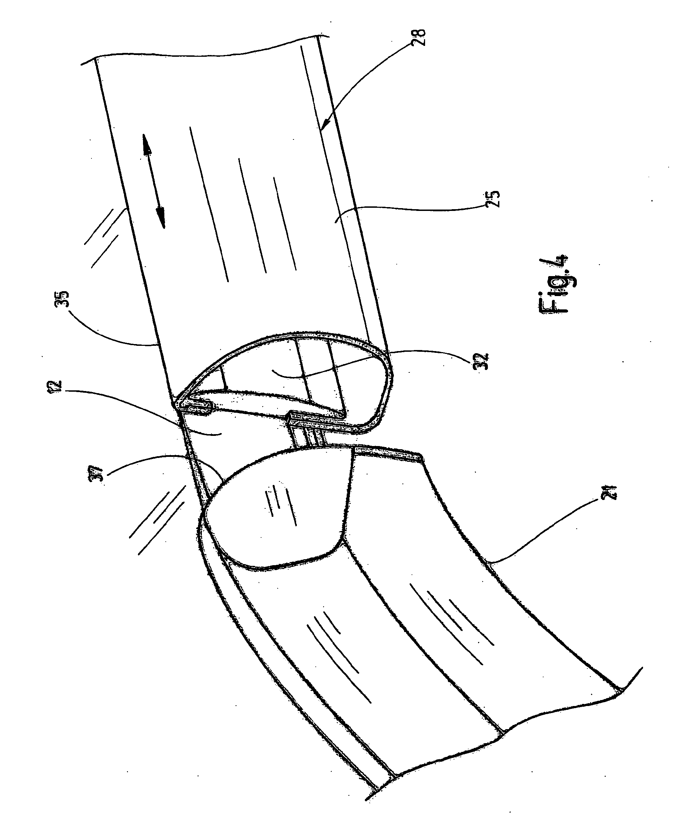

Fig. 4 zeigt eine perspektivische Teilansicht des Grundkörpers 12 im Bereich eines seitlichen Holms 28.

Am Grundkörper 12 sind der Anschlag 37 und die Längsführung 32 ausgebildet. Auf die Längsführung 32 ist das Holmelement 25 aufgeschoben, das mittels des Anschlags 37 in einer Längsposition festgelegt werden kann.

In einer besonders bevorzugten Ausführungsform ist die Längsführung 32 als prismatische Führungsschiene 32 ausgebildet. Auf diese Längsführung 32 kann das Holmelement 25 formschlüssig aufgeschoben werden und wird wenigstens einseitig mittels der Rastmittel 36 (Fig. 2) in Längsrichtung an dem Grundkörper 12 festgelegt.

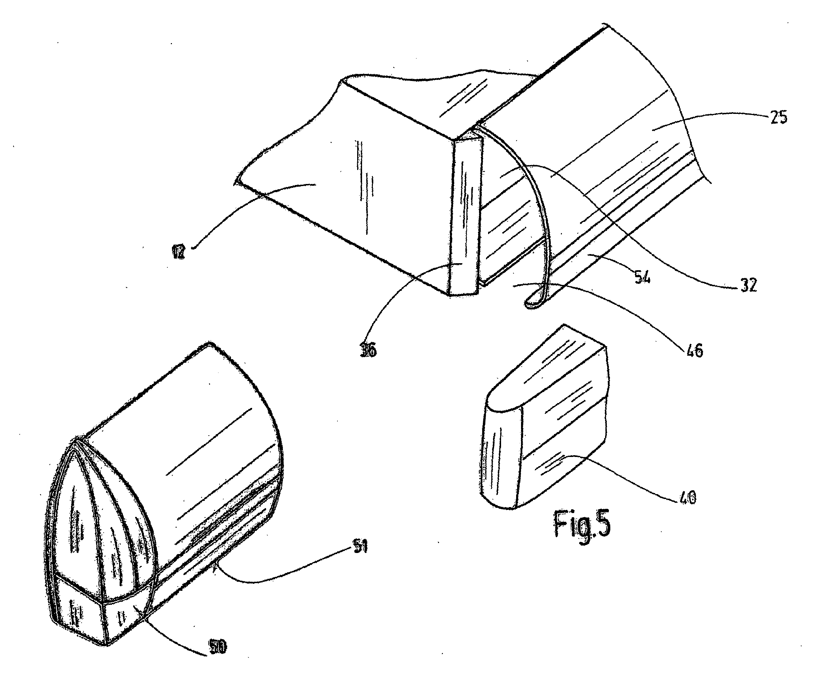

Fig. 5 zeigt eine schematische Detailansicht des Grundkörpers 12 in einem unteren Bereich 54 des seitlichen Holms 28 mit einem elastischen Element 40 und dem Abschlusselement 50 in einer Explosionsdarstellung.

Am Grundkörper 12 ist das Holmelement 25 aufgeschoben und mittels des Rastmittels 36 fixiert. Das Holmelement 25 weist an dem unteren Ende 54 eine Ausklinkung 46 auf.

Ferner weist das Abschlusselement 50 an seinem in Fig. 5 unten dargestellten Ende eine Ausnehmung 51 auf. Die Ausnehmung 51 ist dann, wenn das Abschlusselement 50 in das Holmelement 25 eingesetzt ist, etwa kongruent mit der Ausklinkung 46.

Das elastische Element 40 weist einen in Fig. 5 oben dargestellten Abschnitt auf, der über die Ausklinkung 46 in die Ausnehmung 51 des Abschlusselementes 50 von unten eingeführt wird. Ein unterer Abschnitt des elastischen Elementes 40 steht anschließend nach unten gegenüber dem Holmelement 25 vor und dient als ein rutschsicherer Fuß.

In der Ausnehmung 51 wird der obere Teil des elastischen Elementes 40 vorzugsweise verklebt. Es ist jedoch auch denkbar, das elastische Element 40 mit seitlichen Vorsprüngen zu versehen, so dass es das Abschlusselement 50 oder das Holmelement 25 von innen hintergreifen kann, um somit "rastend" festgelegt zu werden.

Bei dem erfindungsgemäßen Küchenhobel wird folglich wenigstens eine Funktionsfläche durch ein Anbauteil "veredelt". Dies kann die Grifffläche 22, die Auslauffläche 18, die Führungsfläche 20 und/oder die durch die Holme 28, 30 gebildete Fläche sein. Die zur Veredelung verwendeten Anbauteile bestehen vorzugsweise aus einem höherwertigen Material, wie z.B. einem Metall.

Die Anbauteile werden entweder formschlüssig mit dem Grundkörper 12 verbunden. Die Holmelementen werden beispielsweise auf eine Führungsschiene aufgeschoben, und das Griff-Anbauteil 23 wird auf einen Griffträger aufgeclipst. Wenn die Anbauteile auf diese Weise formschlüssig an dem fertig gespritzten Grundkörper montiert werden, ist es bevorzugt, wenn zumindest einige der Anbauteile lösbar an dem Grundkörper festgelegt sind. In diesem Fall ist es möglich, die Anbauteile abzunehmen und zu reinigen, sollten Verschmutzungen zwischen den Grundkörper und das Anbauteil gelangen.

Es ist jedoch auch möglich, Anbauteile mit dem Grundkörper zu verspritzen, in welchem Fall die Anbauteile unlösbar mit dem Grundkörper verbunden sind.

Sofern der Küchenhobel einen auswechselbaren Einsatz 19 aufweist, ist es auch möglich, ein Anbauteil an dem Einsatz festzulegen, um die von dem Einsatz gebildete Führungsfläche 20 zu bilden.

Insgesamt bietet der dargestellte Küchenhobel 10 eine besonders gute Möglichkeit, die Funktionsflächen vor Abnutzung zu schützen und verhindert so, dass sich Reibgutreste und Bakterien in Kratzern und Rillen ansammeln. Weiterhin vermitteln die Anbauteile ein wertiges Aussehen des Küchenhobels 10, wobei der Herstellungsaufwand deutlich reduziert ist.

Weiterhin bietet der dargestellte Küchenhobel 10 die Möglichkeit, vom Grundkörper 12 des Küchenhobels 10 ausgehend durch Variation der Anbauteile 23, 25, 27, 63, 71 eine Vielzahl von Variationen des Gesamtproduktes lediglich durch Variation der Anbauteile zu produzieren, wobei die Herstellungs- und Entwicklungskosten gering bleiben. Dabei ist es auch denkbar, die Anbauteile als zusätzliche Produktvariante z.B. aus Holz herzustellen, um ein besonders wertiges Aussehen des Küchenhobels zu erzielen.

## Patentansprüche

1. Küchenhobel (10) zum Schneiden von Schneidgut wie Obst, Gemüse etc. mit einem Grundkörper (12), an dem ein Messer (14) festgelegt ist, das an einer Kante (16) einer Auslauffläche (18) angeordnet ist, und mit einer Führungsfläche (20), auf der das Schneidgut bewegt und dem Messer (14) definiert zugeführt werden kann, wobei der Grundkörper (12) wenigstens eine Funktionsfläche (18; 20; 22; 24, 26) aufweist, an der der Küchenhobel (10) von einem Benutzer ergreifbar ist, auf der ein Schneidguthalter bewegbar ist und/oder auf der Schneidgut bewegbar ist, wobei die Funktionsfläche (18; 20; 22; 24, 26) durch wenigstens ein von dem Grundkörper (12) separat ausgebildetes Anbauteil (23; 25, 27; 63; 71) gebildet ist, das mit dem Grundkörper (12) verbunden ist, **dadurch gekennzeichnet, dass** das Anbauteil (23) nach Art einer Manschette auf einen Griffträger (21) des Grundkörpers (12) aufgeclipst ist.

2. Küchenhobel nach Anspruch 1, **dadurch gekennzeichnet, dass** wenigstens ein weiteres Anbauteil (25, 27) als Holmelement (25, 27) ausgebildet ist, das einen Teil wenigstens eines seitlichen Holms (28, 30) des Küchenhobels (10) bildet.

3. Küchenhobel nach Anspruch 2, **dadurch gekennzeichnet, dass** das Holmelement (25, 27) auf eine Längsführung (32, 34) an dem Grundkörper (12) aufgeschoben ist.

4. Küchenhobel nach Anspruch 3, **dadurch gekennzeichnet, dass** die Längsführung (32, 34) als prismatische Führungsschiene (32, 34) im Grundkörper (12) ausgebildet ist.

5. Küchenhobel nach einem der Ansprüche 2 bis 4, **dadurch gekennzeichnet, dass** das Holmelement (25, 27) mit einem oberen Ende (35) an einem Anschlag (37) des Grundkörpers (12) anliegt.

6. Küchenhobel nach einem der Ansprüche 2 bis 5, **dadurch gekennzeichnet, dass** das Holmelement (25, 27) mittels Rastmitteln (36, 38) in einer Längsposition an dem Grundkörper (12) festgelegt ist.

7. Küchenhobel nach einem der Ansprüche 1 bis 6, **dadurch gekennzeichnet, dass** wenigstens ein elastisches Element (40, 42) an wenigstens einem der Holmelemente (25, 27) festgelegt ist.

8. Küchenhobel nach einem der Ansprüche 2 bis 7, **dadurch gekennzeichnet, dass** wenigstens ein Abschlusselement (50, 52) an einem unteren Ende (54, 56) wenigstens eines der Holmelemente (25, 27) festgelegt ist.

9. Küchenhobel nach Anspruch 7, **dadurch gekennzeichnet, dass** das elastische Element (40, 42) in einer Ausklinkung (46, 48) des Holmelements (25, 27) formschlüssig festgelegt ist.

10. Küchenhobel nach einem der Ansprüche 1 bis 9, **dadurch gekennzeichnet, dass** der Grundkörper (12) aus Kunststoff im Spritzgussverfahren hergestellt ist und dass die Auslauffläche (18) durch ein Anbauteil (63) aus Metall gebildet ist, das in den Grundkörper (12) eingespritzt ist.

11. Küchenhobel nach einem der Ansprüche 1 bis 10, **dadurch gekennzeichnet, dass** der Küchenhobel (10) einen auswechselbaren Einsatz (64) aufweist, der mittels Festlegungsmitteln (66, 68) an dem Grundkörper (12) festlegbar ist und der die Führungsfläche (20) bildet.

12. Küchenhobel nach Anspruch 11, **dadurch gekennzeichnet, dass** der Einsatz (64) aus einem Kunststoff im Spritzgussverfahren hergestellt ist und dass die Führungsfläche (20) durch ein Anbauteil (71) aus Metall gebildet ist, das in den Einsatz (64) eingespritzt ist.

13. Küchenhobel nach einem der Ansprüche 1 bis 12, **dadurch gekennzeichnet, dass** der Grundkörper (12) Kunststoff aufweist.

14. Küchenhobel nach einem der Ansprüche 1 bis 13, **dadurch gekennzeichnet, dass** das Anbauteil (23; 25, 27; 63; 71) Metall aufweist.

## Claims

1. Kitchen slicer (10) for cutting items such as fruit, vegetables, etc., having a basic body (12), to which a blade (14) is fixed, which is arranged on an edge (16) of a runout surface (18), and having a guide surface (20), over which the items can be moved and fed to the blade (14) in a defined manner, wherein the basic body (12) has at least one functional surface (18; 20; 22; 24, 26), by which the kitchen slicer (10) can be gripped by a user, over which an item holder can be moved and/or over which the items can be moved, wherein the functional surface (18; 20; 22; 24, 26) is formed by at least one add-on part (23; 25, 27; 63; 71), which is formed separately from the basic body (12) and is connected to the basic body (12), **characterized in that** the add-on part (23) is clipped onto a handle carrier (21) of the basic body (12) in the manner of a sleeve.

2. Kitchen slicer according to Claim 1, **characterized in that** at least one further add-on part (25, 27) is designed as a bar element (25, 27), which forms a part of at least one lateral bar (28, 30) of the kitchen slicer (10).

3. Kitchen slicer according to Claim 2, **characterized in that** the bar element (25, 27) is pushed onto a longitudinal guide (32, 34) on the basic body (12).

4. Kitchen slicer according to Claim 3, **characterized in that** the longitudinal guide (32, 34) is designed as a prismatic guide rail (32, 34) in the basic body (12).

5. Kitchen slicer according to one of Claims 2 to 4, **characterized in that** the bar element (25, 27) has an upper end (35) butting against a stop (37) of the basic body (12).

6. Kitchen slicer according to one of Claims 2 to 5, **characterized in that** the bar element (25, 27) is fixed in a longitudinal position on the basic body (12) by way of latching means (36, 38).

7. Kitchen slicer according to one of Claims 1 to 6, **characterized in that** at least one elastic element (40, 42) is fixed on at least one of the bar elements (25, 27).

8. Kitchen slicer according to one of Claims 2 to 7, **characterized in that** at least one termination element (50, 52) is fixed at a lower end (54, 56) of at least one of the bar elements (25, 27).

9. Kitchen slicer according to Claim 7, **characterized in that** the elastic element (40, 42) is fixed in a form-fitting manner in an opening (46, 48) of the bar element (25, 27).

10. Kitchen slicer according to one of Claims 1 to 9, **characterized in that** the basic body (12) is produced by injection moulding of plastics material, and **in that** the runout surface (18) is formed by an add-on part (63) made of metal, which is incorporated in the basic body (12) by injection moulding.

11. Kitchen slicer according to one of Claims 1 to 10, **characterized in that** the kitchen slicer (10) has an interchangeable insert (64), which can be fixed on the basic body (12) by way of fixing means (66, 68) and which forms the guide surface (20).

12. Kitchen slicer according to Claim 11, **characterized in that** the insert (64) is produced by injection moulding of plastics material and **in that** the guide surface (20) is formed by an add-on part (71) made of metal, which is incorporated in the insert (64) by injection moulding.

13. Kitchen slicer according to one of Claims 1 to 12, **characterized in that** the basic body (12) contains plastics material.

14. Kitchen slicer according to one of Claims 1 to 13, **characterized in that** the add-on part (23; 25, 27; 63; 71) contains metal.

## Revendications

1. Trancheuse de cuisine (10) pour découper un produit à trancher comme des fruits, des légumes, etc., comprenant un corps de base (12) sur lequel est fixé un couteau (14), qui est disposé sur une arête (16) d'une surface de sortie (18), et comprenant une surface de guidage (20) sur laquelle le produit à trancher est déplacé et peut être acheminé de manière définie au couteau (14), le corps de base (12) présentant au moins une surface fonctionnelle (18 ; 20 ; 22 ; 24, 26) au niveau de laquelle la trancheuse de cuisine (10) peut être saisie par un utilisateur, sur laquelle un support de produit à trancher peut être déplacé et/ou sur laquelle le produit à trancher peut être déplacé, la surface fonctionnelle (18 ; 20 ; 22 ; 24, 26) étant formée par au moins une pièce rapportée (23 ; 25, 27 ; 63 ; 71) réalisée de manière séparée du corps de base (12), qui est connectée au corps de base (12), **caractérisée en ce que** la pièce rapportée (23) est enclipsée à la manière d'une manchette sur un support de préhension (21) du corps de base (12).

2. Trancheuse de cuisine selon la revendication 1, **caractérisée en ce qu'**au moins une autre pièce rapportée (25, 27) est réalisée sous forme d'élément de longeron (25, 27) qui forme une partie d'au moins un longeron latéral (28, 30) de la trancheuse de cuisine (10).

3. Trancheuse de cuisine selon la revendication 2, **caractérisée en ce que** l'élément de longeron (25, 27) est poussé sur un guide longitudinal (32, 34) sur le corps de base (12).

4. Trancheuse de cuisine selon la revendication 3, **caractérisée en ce que** le guide longitudinal (32, 34) est réalisé sous forme de rail de guidage prismatique (32, 34) dans le corps de base (12).

5. Trancheuse de cuisine selon l'une quelconque des revendications 2 à 4, **caractérisée en ce que** l'élément de longeron (25, 27) s'applique avec une extrémité supérieure (35) contre une butée (37) du corps de base (12).

6. Trancheuse de cuisine selon l'une quelconque des revendications 2 à 5, **caractérisée en ce que** l'élément de longeron (25, 27) est fixé à l'aide de moyens d'encliquetage (36, 38) dans une position longitudinale sur le corps de base (12).

7. Trancheuse de cuisine selon l'une quelconque des revendications 1 à 6, **caractérisée en ce qu'**au moins un élément élastique (40, 42) est fixé sur au moins l'un des éléments de longeron (25, 27).

8. Trancheuse de cuisine selon l'une quelconque des revendications 2 à 7, **caractérisée en ce qu'**au moins un élément de terminaison (50, 52) est fixé sur une extrémité inférieure (54, 56) d'au moins l'un des éléments de longeron (25, 27).

9. Trancheuse de cuisine selon la revendication 7, **caractérisée en ce que** l'élément élastique (40, 42) est fixé par engagement par correspondance géométrique dans une entaille (46, 48) de l'élément de longeron (25, 27).

10. Trancheuse de cuisine selon l'une quelconque des revendications 1 à 9, **caractérisée en ce que** le corps de base (12) est fabriqué en plastique par un procédé de moulage par injection et **en ce que** la surface de sortie (18) est formée par une pièce rapportée (63) en métal, qui est moulée par injection dans le corps de base (12).

11. Trancheuse de cuisine selon l'une quelconque des revendications 1 à 10, **caractérisée en ce que** la trancheuse de cuisine (10) présente un insert remplaçable (64) qui peut être fixé à l'aide de moyens de fixation (66, 68) sur le corps de base (12) et qui forme la surface de guidage (20).

12. Trancheuse de cuisine selon la revendication 11, **caractérisée en ce que** l'insert (64) est fabriqué en plastique par un procédé de moulage par injection et **en ce que** la surface de guidage (20) est formée par une pièce rapportée (71) en métal, qui est moulée par injection dans l'insert (64).

13. Trancheuse de cuisine selon l'une quelconque des revendications 1 à 12, **caractérisée en ce que** le corps de base (12) contient du plastique.

14. Trancheuse de cuisine selon l'une quelconque des revendications 1 à 13, **caractérisée en ce que** la pièce rapportée (23 ; 25, 27 ; 63 ; 71) contient du métal.
